# EUROPEAN PATENT APPLICATION

(11) **EP 1 119 147 A1**
(43) Date of publication of application: **25.07.2001**
(21) Application number: 00300337.3
(22) Date of filing: 18.01.2000
(51) Int. Cl.: H04L 29/06

(54) **Provision of secure access for telecommunications system**

(71) Applicant: BRITISH TELECOMMUNICATIONS public limited company, London EC1A 7AJ (GB)
(72) Inventor: Pilkington, John David Richard, Ipswich, Suffolk IP9 2UT (GB)
(74) Representative: Lidbetter, Timothy Guy Edwin

(57) **Abstract**

A gateway server (7) giving access from a terminal (2) to a telecommunications network (10), is controlled by the user making a first telecommunications call, in which a pseudo-random number generated by a token 1 is transmitted for storage in a database (6) together with the identity of the calling terminal (2). A second call is then made from the same terminal (2) to establish connection with the gateway (7), the calling terminal's identity being used to retrieve the pseudo-random code stored in the database (6) for comparison with access security data generated by the gateway (7). This allows password protected access for terminals (2) not equipped for the generation of passwords as part of the log-on process.

## Description

This invention relates to the provision of secure access for telecommunications systems, and in particular in the provision of secure access to the "Internet" or similar distributed or other computer networks using dial-in telecommunications links. Provision of secure access is necessary to prevent abuses by unauthorised users, for example by gaining access to private data such as that available on private "Intranets", or getting free use of the authorised user's account.

It is common practice to provide secure access to systems by requiring the user to enter a security code (Personal Identity Number or "PIN") known only to the authorised user. However, such codes are vulnerable to interception when they are transmitted during the log-on process. They must also be easy to remember by the user, so they have to be relatively simple.

Some systems make use of single-use access codes generated by a pseudo-random process and displayed on a "token" carried by the user. The token is a small independent device, which runs a pseudo-random, time-based algorithm which causes a pseudo-random numerical password to be displayed on a screen. As part of the log-on process to be performed when a user wishes to make connection to the network, he reads the code displayed on the token's display and transmits it to the network as plain text once initial connection is made to the network, but before the user is assigned an IP address and an actual connection. This operation is synchronised with an access control server at the network end, which performs the same algorithm. The codes have to match for network authentication to be allowed. If the code transmitted by the user is intercepted, it cannot be misused on subsequent occasions as it changes frequently (typically after a few minutes).

In order to prevent misuse of stolen or mislaid tokens, it is usual for both a PIN and a token code to be required for successful connection to the network.

This procedure requires the user terminal to be configured to interrupt the log-in process by prompting the user to enter the access code and to abort the log-in process if the correct code is not transmitted. Although typical general-purpose desktop and laptop computers can be configured to do this, the process is cumbersome, and inconvenient if the terminal is only likely to be used for secure access occasionally. Moreover, some devices and systems currently on the market, such as "WAP" (Wireless Application Protocol) telephones, have the login process, including the user identification, permanently programmed into their operating systems, and do not have the capability to interrupt the network connection process to provide the required authentication codes. WAP phones establish an Internet Protocol session and then pass WTP (WAP Transport Protocol) signalling over this connection to connect to the WAP server. The phones operate as a normal anonymous internet connection and do not have the ability to allow the user to enter the variable code after dialling, and therefore cannot be used to allow secure network login. Such telephones can, of course, also be used to make ordinary telephone calls over the public switched telephone network (PSTN), and can transmit DTMF (dual tone multi-frequency) signals like a conventional telephone

According to the invention there is provided an access control system for controlling a gateway server giving access from a terminal to a telecommunications network, comprising:
access means for receiving telecommunications calls of a first type,
storage means for storing data received over telecommunications calls of the first type and data identifying the terminal from which each such call is made,
and access control means for receiving telecommunications calls of a second type and being responsive to data identifying the terminal from which such calls are made to retrieve from the storage means data stored therein corresponding to a call of the first type originating from the same terminal, and being arranged to control the gateway server according to the data so retrieved.

According to another aspect, there is provided a method of controlling a gateway server giving access from a terminal to a telecommunications network, wherein: on receipt of a telecommunications call of a first type, data received over the telecommunications call is stored together with data identifying the terminal from which the call is made, and on receipt of a telecommunications call of a second type, the terminal from which the call is made is identified, and data previously received over a telecommunications call of the first type from the same terminal is retrieved, the data so retrieved being used to control the gateway server.

Preferably, the access control means generates a pseudo-random sequence for comparison with sequences received over telecommunications calls of the first type. The storage means may be arranged to store sequences received over the telecommunications calls of the first type, the access control means having means for generating the pseudo-random sequence in response to receipt of the second telecommunications call and comparing it with the sequence stored in the storage means. Alternatively, the access control means may have means for generating the pseudo-random sequence in response to receipt of telecommunications calls of the first type, comparing the pseudo-random sequence with a sequence received over the first telecommunications call, the storage means being arranged to store comparison data indicative of the result of said comparison, the access control means being arranged to retrieve said comparison data in response to receipt of a telecommunications call of the second type from the respective terminal.

This invention overcomes the limitations of telephone apparatus not configured or equipped for transmission of such codes by using an initial PSTN connection to transfer the required information to the network using DTMF tones, and then placing these in the network authentication stream at the appropriate place.

An embodiment of the invention will now be discussed by way of example, with reference to the drawings, which illustrate the various elements which cooperate to perform the invention. In the drawings:
Figure 1 illustrates the prior art system
Figure 2 is a flow chart illustrating the operation of the prior art system
Figure 3 illustrates a system according to the invention
Figure 4 is a flow chart illustrating the processes taking place in a first method of operation of this embodiment
Figure 5 is a flow chart illustrating an alternative method of operation of the invention.

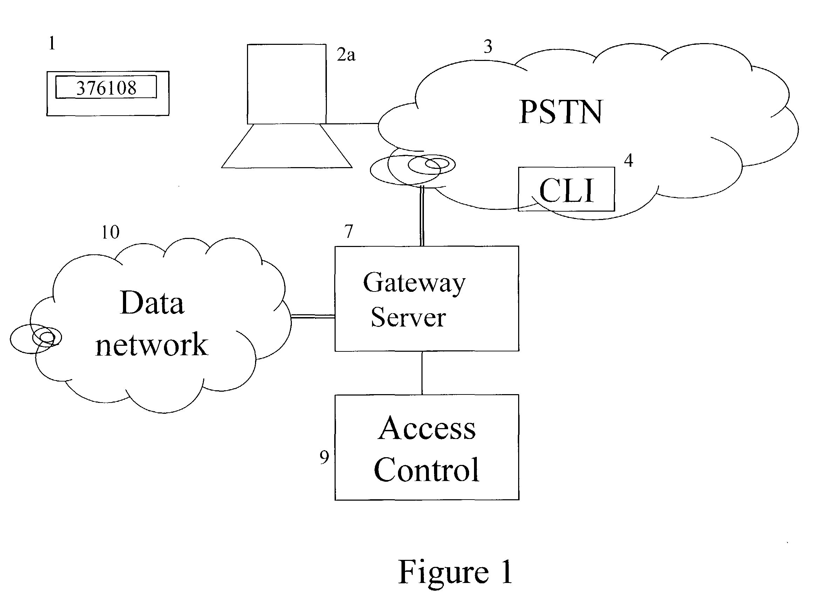

As shown in Figure 1, there is provided the user's code generation token 1, a computer and associated modem 2a, which is connected through the telephone network 3, (which network includes a Calling Line Identity generation unit 4, although this is not used by the prior art system) to a dial-in gateway server 7 giving access to a data network 10, and an access control server 9 associated with the gateway server 7.

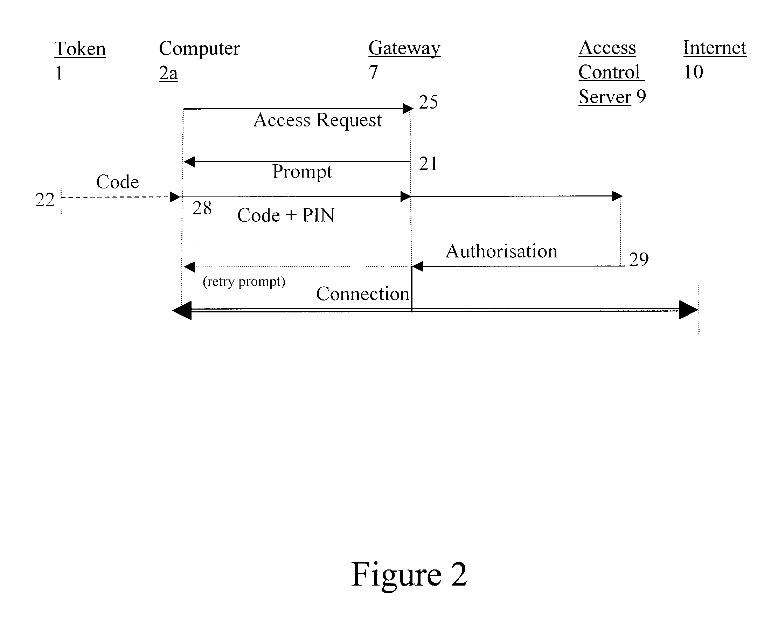

As shown in Figure 2, the prior art system operates as follows:

When the user connects his terminal 2a to the dial-in gateway 7 using the telephone network 3 (step 25), the login process is interrupted by a screen prompt 21, requiring the user to read the code currently displayed by the token 1 (step 22) and transmit that code and his PIN to the gateway server 7, which passes it on to the access control server 9 (step 28). The access control server 9 runs the pseudo-random code generation process to generate an access code for comparison with that received from the user. If the code is correct an authorisation is generated (step 29) allowing the gateway 7 to make the connection between the user terminal 2a and the data network 10. If the code is incorrect a retry prompt or other error message is transmitted back to the user terminal 2a. Thus access is only possible for a user who is in possession of the token and also knows the user's PIN.

If a connection is attempted later than a predetermined time after the initial transmission of the code word, the connection is not enabled. The access control unit 7 typically only has a limited time window (2 or 3 minutes) for which any given access code is valid. If an old code is transmitted then access is denied as the access codes received from the user (step 28) does not correspond with that generated byu the access control server 9.

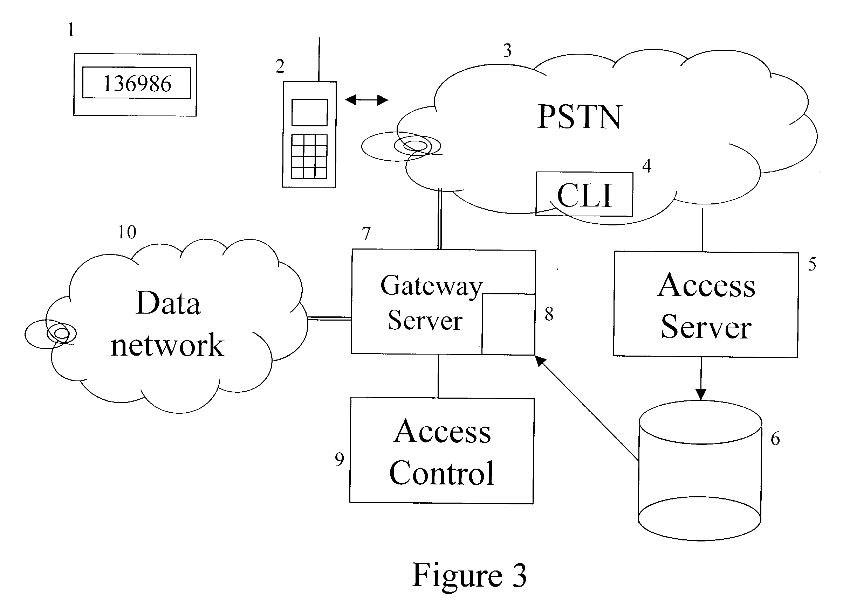

In the system of the invention, shown in Figure 3, the gateway server 7 is associated with a dial-in access server 5 having an access database 6, and a data retrieval unit 8. The user is shown as using a WAP-compatible telephone 2 not having the ability to interrupt the login process in the way required by the prior art system.

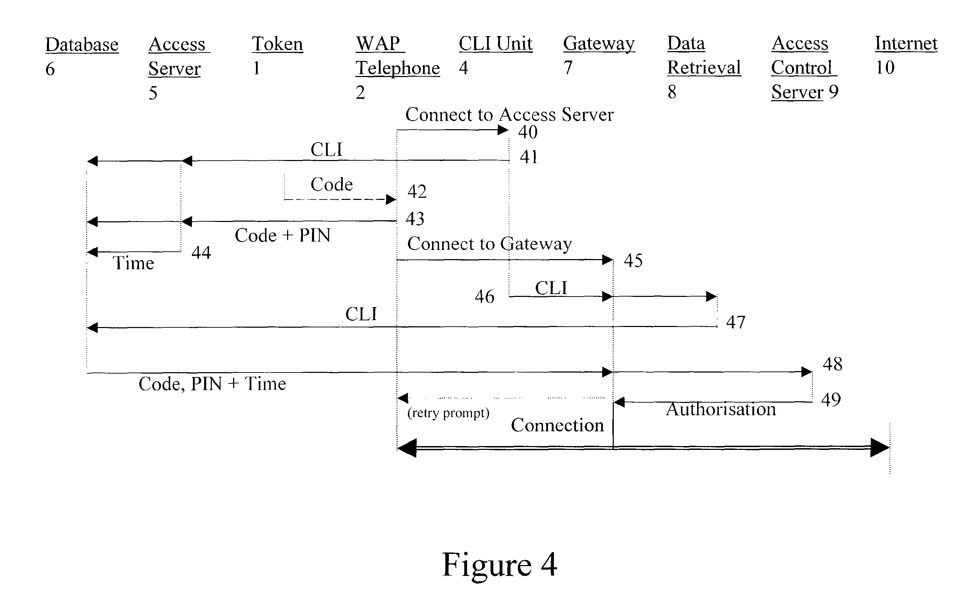

As shown in Figure 4, the invention operates as follows:

The user first uses the telephone 2 to dial in to the access server 5 over the PSTN network 3 (steps 40,41). The Calling Line Identity facility 4 in the network generates a signal identifying the telephone 2 which is read by the access server 5. The user now reads the pseudo-random number currently displayed by the token 1 (step 42), and transmits this and his authorisation code (PIN), using DTMF tones, to the access server 5 (step 43). The pseudo-random number and the PIN confirm the identity of the user. The access server 5 records the caller's calling line identity (CLI), the two codes transmitted by the user, and the time, in a database 6 (step 44).

The user now drops the first call and connects to the dial-in gateway 7 using the same telephone 2 (step 45). The gateway 7 then records the CLI generated by the CLI generation unit 4 and passes this to the data retrieval unit 8 (step 46), which uses the CLI to retrieve the information held with the CLI in the database 6 (step 47). This data is then returned to the access control server 9 (step 48). The access control server 9 now has all the information required to enable a login authentication to be performed. The access control server 9 operates in the same way as for a normal access-controlled login, running the pseudo-random code generation process to generate an access code for comparison with that received from the user. If the code is correct an authorisation is generated (step 49) allowing the gateway 7 to make the connection between the user terminal 2 and the data network 10. If the code is incorrect a retry prompt or other error message is transmitted back to the user terminal 2. Thus access is only possible for a user who is in possession of the token and also knows the user's PIN.

If a connection is attempted more than a predetermined time after the initial transmission of the code word, the connection is not enabled. The access control server 9 typically only has a limited time window (2 to 3 minutes) for which any given access code is valid. If the second call 45 falls outside this time window then access is denied as the access codes read from the database 4 and the access control unit 7 do not correspond, and the user must try again, up to a predetermined maximum number of attempts.

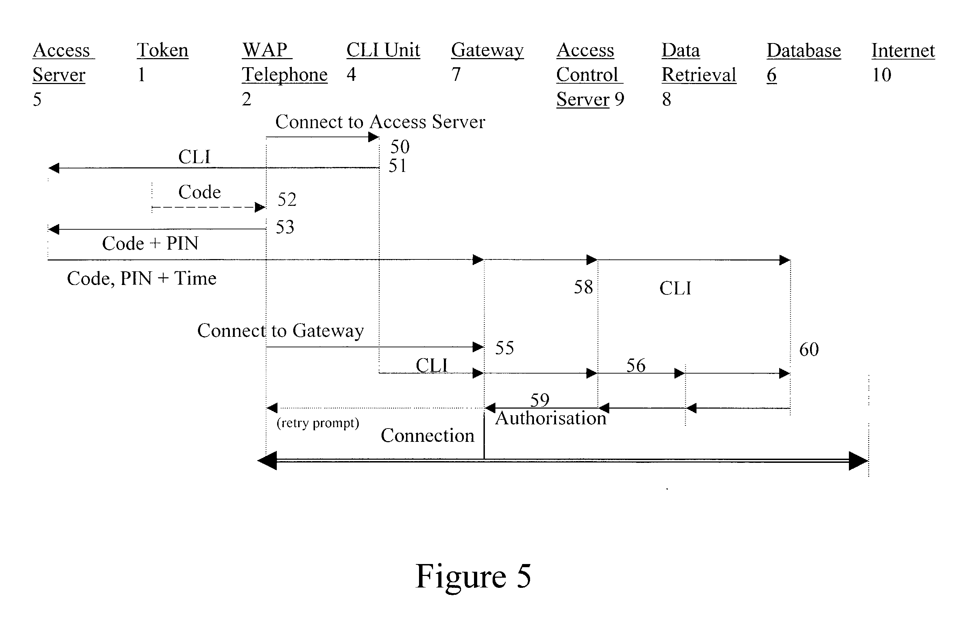

An alternative process is shown in Figure 5, in which steps similar to those in the process of Figure 4 are identified by having the same final digit. The initial code capture (steps 50, 51, 52, 53) is carried out as before, but the access control server 9 then receives the CLI, PIN and code number from the access server 5 (step 58) and performs the validation process before the second connection (55,56) is made, storing the authorisation code (59) in the store 6. The user connection decision performed by the access control server 9 can then be based solely on receipt of the appropriate CLI (step 56): by the retrieval unit 8, which then accesses the store 6 to identify whether the connection has been authorised, and returns an authorisation 59 if one has been stored for that CLI. This process simplifies the data stored in the database 6, awaiting the setting up of the second call 55 before retrieving it using a retrieval unit 8, and allows a faster set-up time, as the connection can be validated by the access control server 9 before the second call is initiated. However, it is less secure, as the connection becomes validated before a call attempt (55) is made to the gateway server 7, allowing greater opportunity for an unauthorised user to access the connection through the validated gateway.

## Claims

1. An access control system for controlling a gateway server (7) giving access from a terminal (2) to a telecommunications network (10), comprising:
access means (5) for receiving telecommunications calls of a first type,
storage means (6) for storing data received over telecommunications calls of the first type and data identifying the terminal from which each such call is made,
and access control means (9) for receiving telecommunications calls of a second type and being responsive to data identifying the terminal from which such calls are made to retrieve from the storage means (6) data stored therein corresponding to a call of the first type originating from the same terminal, and being arranged to control the gateway server (7) according to the data so retrieved.

2. An access control system according to claim 1 wherein the access control means (9) generates a pseudo-random sequence for comparison with a sequence received over a telecommunications call of the first type.

3. An access control system according to claim 2 wherein the storage means (6) is arranged to store a sequence received over telecommunications call of the first type, and the access control means (9) having means for generating the pseudo-random sequence in response to receipt of a telecommunications call of the second type and comparing it with the sequence stored in the storage means.

4. An access control system according to claim 2, the access control means (9) having means for generating the pseudo-random sequence in response to receipt of a telecommunications call of the first type, comparing the pseudo-random sequence with a sequence received over the telecommunications call, and the storage means being arranged to store comparison data indicative of the result of said comparison, the access control means being arranged to retrieve said comparison data in response to receipt of a telecommunications call of the second type.

5. A method of controlling a gateway server (7) giving access from a terminal to a telecommunications network, wherein
on receipt of a telecommunications call of a first type, data received over the telecommunications call is stored together with data identifying the terminal from which the call is made,
on receipt of a telecommunications call of a second type, the terminal from which the call is made is identified, and data previously received over a telecommunications call of the first type from the same terminal is retrieved, the data so retrieved being used to control the gateway server.

6. A method according to claim 5 wherein pseudo-random sequences are generated for comparison with sequences received over telecommunications calls of the first type, the gateway server being controlled to permit access to the telecommunications network if the sequences agree for calls of the first type and the second type in respect of the same terminal.

7. A method according to claim 6 wherein the pseudo-random sequence is generated in response to receipt of a telecommunications call of the second type.

8. A method according to claim 6 in which the pseudo-random sequence is generated in response to receipt of a telecommunications call of the first type, the result of the comparison being stored for retrieval when a telecommunications call of the second type is received from the same terminal.
